# EUROPÄISCHE PATENTSCHRIFT

(11) **EP 3 096 969 B1**
(45) Veröffentlichungstag und Bekanntmachung des Hinweises auf die Patenterteilung: **11.05.2022**
(21) Anmeldenummer: 14700933.6
(22) Anmeldetag: 20.01.2014
(51) Int. Cl.: B60K 37/06, G06F 3/0488

(54) **ANWENDERSCHNITTSTELLE UND VERFAHREN ZUM STEUERN EINER LAUTSTÄRKE MITTELS EINER BERÜHRUNGSSENSITIVEN ANZEIGEEINHEIT**
USER INTERFACE AND METHOD FOR CONTROLLING A VOLUME BY MEANS OF A TOUCH-SENSITIVE DISPLAY UNIT
INTERFACE UTILISATEUR ET PROCÉDÉ POUR RÉGULER UNE INTENSITÉ SONORE AU MOYEN D'UNE UNITÉ D'AFFICHAGE TACTILE

(43) Veröffentlichungstag der Anmeldung: 30.11.2016
(73) Patentinhaber: Volkswagen Aktiengesellschaft, 38440 Wolfsburg (DE)
(72) Erfinder: WILD, Holger, 10179 Berlin (DE); CZELNIK, Mark, Peter, 38444 Wolfsburg (DE)
(86) Internationale Anmeldenummer: PCT/EP2014/051056
(87) Internationale Veröffentlichungsnummer: WO 2015/106830

(56) Entgegenhaltungen:
- EP-A1- 2 541 389
- DE-A1-102011 112 565
- US-A1- 2013 141 365
- None

## Beschreibung

### Stand der Technik

Die vorliegende Erfindung betrifft eine Anwenderschnittstelle sowie ein Verfahren zum Steuern einer Lautstärke mittels einer berührungssensitiven Anzeigeeinheit. Insbesondere betrifft die vorliegende Erfindung eine Vermeidung einer Anzeige zusätzlicher Schaltflächen sowie eine Vermeidung nach dem Stand der Technik erforderlicher Bedienschritte.

Anwenderschnittstellen von Fortbewegungsmitteln, insbesondere Fahrzeugen (Pkw, Lkw o.Ä.), weisen bekanntermaßen unterschiedliche Eingabeeinrichtungen auf, mittels welchen die Lautstärke einer Klangwiedergabeeinrichtung eingestellt werden kann. Insbesondere ist ein Drehknopf als Eingabeeinrichtung bekannt, welcher, wenn er in eine erste Richtung gedreht wird, die Lautstärke senkt und, wenn er in eine zweite Richtung gedreht wird, die Lautstärke anhebt. Im Bereich mobiler Endgeräte (z.B. Smartphones, Tablet-PCs) ist es zudem bekannt, auf einem Bildschirm mit einer berührungsempfindlichen Oberfläche einen Klangregler darzustellen, dessen Bedienelement durch eine Wischgeste hin- und herbewegt werden kann.

DE 10 2007 039 445 A1 und DE 10 2009 008 041 A1 offenbaren Anwenderschnittstellen für Fahrzeuge, bei welchen eine Annäherungssensorik verwendet wird, um das Menü einer Anwenderschnittstelle von einem Anzeigemodus in einen Bedienmodus wechselt. Unter anderem wird vorgeschlagen, in Abhängigkeit dargestellter Anzeigeelemente Wischgesten zur Beeinflussung einer Wiedergabe der Lautstärke zu verwenden.

EP 2 541 389 A1 offenbart ein portables Multifunktionsgerät, auf dessen Display ein Schieberegler zur Einflussnahme auf eine Wiedergabelautstärke dargestellt werden kann.

DE 10 2011 112 565 A1 offenbart ein Verfahren zum Bedienen einer Bedienvorrichtung für ein Kraftfahrzeug, wobei die Bedienvorrichtung zwei Bedienmodi kennt. Einer der Bedienmodi kann ausgewählt werden, so dass ein Inhalt auf einem Anzeigeelement entsprechend dem ausgewählten Bedienmodus der Bedienvorrichtung spezifisch dargestellt wird.

US 2013/0141365 A1 offenbart eine Vorrichtung zur Erkennung einer Kraftwirkung einer berührenden Eingabe. Mit unterschiedlichen Kraftwirkungen durch den Finger eines Anwenders kann der Anwender unterschiedliche, vordefinierte Funktionen auslösen.

Die begrenzte Oberfläche üblicher Anzeigeinstrumete erfordert eine intelligente Auswahl mit den vielfältigen Funktionen assoziierter Informationen und Schaltflächen. Die im Stand der Technik bekannten Lösungen erfordern jedoch stets eine Darstellung eines Lautstärkereglers, bevor dieser bedient werden kann. Es ist daher eine Aufgabe der vorliegenden Erfindung, den vorgenannten Bedarf zu stillen.

### Offenbarung der Erfindung

Die vorstehend genannte Aufgabe wird erfindungsgemäß durch ein Verfahren zum Steuern einer Laustärke gemäss Anspruch 1, sowie durch eine Anwenderschnittstelle gemäss Anspruch 7, welche zur Ausführung des Verfahrens eingerichtet ist, gelöst. Dabei dient das Verfahren zum Steuern einer Lautstärke mittels einer Anzeigeeinheit, welche beispielsweise eine berührungssensitive Oberfläche umfassen kann. Solche Anzeigeeinheiten werden üblicherweise als Touchscreen bezeichnet. In einem ersten Schritt erfolgt die Darstellung einer Vielzahl Schaltflächen auf der Anzeigeeinheit. Unter einer "Schaltfläche" sei im Rahmen der vorliegenden Erfindung ein auf der Anzeigeeinheit dargestelltes Bedienelement verstanden, welches bei einem Antippen ("Klickgeste") eine Ausführung einer assoziierten Funktion veranlasst. Anschließend wird eine Wischgeste vor und/oder auf einer Schaltfläche der Anzeigeeinheit, welche eingerichtet ist, im Ansprechen auf eine Tippgeste (T) eine nicht mit einer Lautstärkeveränderung assoziierte Funktion zu veranlassen, erkannt. Die Erkennung vor der Anzeigeeinheit kann beispielsweise mittels einer Annäherungssensorik erkannt werden. Eine Wischgeste auf (unter Kontakt mit) der Anzeigeeinheit kann über die berührungssensitive Oberfläche erkannt werden. Im Wesentlichen entspricht eine Wischgeste somit einer parallel zur Anzeigefläche der Anzeigeeinheit ausgeführte, im Wesentlichen lineare, Bewegung mittels eines Eingabemittels (z.B. Finger eines Anwenders, Stylus o.Ä.). Erfindungsgemäß ist selbstverständlich nicht ausgeschlossen, dass die Wischbewegung beispielsweise auf einer ersten Schaltfläche beginnt und sich über eine weitere oder noch mehr Schaltflächen erstreckt. Im Ansprechen darauf erfolgt das Steuern der Lautstärke in Abhängigkeit der Wischgeste. Dies kann beispielsweise nach Art eines linear ausgeführten Lautstärkereglers ("Slider") erfolgen, ohne dass der Lautstärkeregler zu Beginn ("Erstkontakt") der Wischgeste auf der Anzeigeeinheit dargestellt worden ist. Vielmehr wird erst im Ansprechen auf das Erkennen der Wischgeste auf einer nicht primär mit einer Wischgeste assoziierten Schaltfläche die Lautstärkeveränderungsfunktion gestartet. Auf diese Weise kann Platz auf der Anzeigeeinheit für andere Informationen verwendet werden, ohne auf eine intuitive und rasch verwendbare Einflussmöglichkeit auf die Lautstärke verzichten zu müssen.

Erfindungsgemäss umfasst das Verfahren ein Erkennen einer Tippgeste im Bereich einer Schaltfläche der Vielzahl Schaltflächen und Auslösen einer mit der Schaltfläche assoziierten Funktion. Wie eingangs beschrieben, sind die Schaltflächen einer Primärfunktion zugeordnet, welche sich nicht auf die Lautstärkeveränderung bezieht. Dies schließt nicht aus, dass ein Tippen auf (beispielsweise einer Pause-Funktion zugeordneten) Schaltfläche die Lautstärke verändert. Auch eine Tippgeste auf eine mit einem "nächster Titel" oder "vorheriger Titel" verbundenen Funktion verändert naturgemäß die Lautstärke. Im Rahmen der vorliegenden Erfindung soll jedoch die Lautstärke unabhängig von einer Unterbrechung oder Veränderung des wiedergegebenen Inhaltes verändert werden. Die "Tippgeste" umfasst erfindungsgemäß keine oder zu vernachlässigende Bewegungen parallel zur Oberfläche der Anzeigeeinheit. Entsprechend wird nicht die Lautstärke einer aktuellen Wiedergabe verändert, sondern eine mit der Schaltfläche assoziierte Funktion ausgelöst. Auf diese Weise kann eine Interaktion mit einer einzigen Schaltfläche unterschiedliche Funktionen starten, ohne dass jede der Funktionen auf der Schaltfläche visualisiert (z.B. durch ein Sinnbild, "Icon") ist. Auch in diesem Zusammenhang sei es unerheblich, ob die Tippgeste in einem Bereich vor der Anzeigeeinheit oder auf (unter Kontakt mit) der Anzeigeeinheit durchgeführt wird.

Die Unteransprüche zeigen bevorzugte Weiterbildungen der Erfindung.

Bevorzugt ist die Vielzahl Schaltflächen für den Zugriff auf jeweilige Primärfunktionen mittels einer Tippgeste eingerichtet. Beispiele für die Primärfunktionen sind "Quellauswahl", "Titelwahl", "vorheriger Titel", "Pause/Wiedergabe", "nächster Titel" und "Klangeinstellungen". Da jedoch eine Musikwiedergabe bzw. allgemeiner gesagt, Audiowiedergabe, unabhängig von dem aktuell zugegriffenen Menüpunkt auf der Anzeigeeinheit stattfinden kann, können auch Situationen auftreten, in welchen Darstellungen auf der Anzeigeeinheit erfolgen, welche mit einer Audiowiedergabe nichts zu tun haben. Auch in diesen Menüs kann die vorliegende Erfindung für eine rasche und intuitive Veränderung der Lautstärke verwendet werden, so dass ein Wechseln in ein Audiowiedergabemenü zur Lautstärkeveränderung nicht erforderlich ist. Auf diese Weise können unnötige Bedienschritte zur Lautstärkeveränderung vermieden werden.

Weiter bevorzugt erfolgt im Ansprechen auf das Erkennen der erfindungsgemäßen Wischgeste die Anzeige eines Lautstärkereglers. Diese kann beispielsweise an einer vordefinierten Stelle und/oder unterhalb des zur Ausführung der Wischgeste verwendeten Eingabemittels dargestellt werden. Der Lautstärkeregler dient dabei zur Orientierung des Anwenders, in welchem relativen Lautstärkebereich er sich derzeit befindet und ermöglicht zusätzliche Eingabegesten zur Lautstärkeveränderung.

Ist der Lautstärkeregler eingeblendet worden, kann durch eine Tippgeste im Bereich des Lautstärkereglers die Lautstärke in Abhängigkeit der Position der Tippgeste auf dem Lautstärkeregler gesteuert werden. Mit anderen Worten springt die Lautstärkeeinstellung auf einem mit der Position der Tippgeste verknüpften Wert. Auf diese Weise ist eine Wischgeste im weiteren Verlauf der Lautstärkeeinstellung nicht mehr erforderlich. Auch die vorgenannte Tippgeste zur Einstellung der Lautstärke kann entweder in einem Annäherungsbereich oder unter Kontakt mit einer Oberfläche der Anzeigeeinheit erfolgen.

Hat der Anwender eine Lautstärke eingestellt, welche ihm zusagt, kann er die Eingabe beenden, indem er das Eingabemittel aus dem Annäherungsbereich entfernt. Nach einer vordefinierten Zeitdauer nach dem Verlassen des Annäherungsbereiches und/oder nach einem letzten Steuern der Lautstärke kann der Lautstärkeregler verborgen bzw. ausgeblendet werden. Sofern die Darstellung des Lautstärkereglers die Vielzahl Schaltflächen (oder eine Untervielzahl der Schaltflächen) ersetzt hat, kann anschließend die (Unter-) Vielzahl der Schaltflächen erneut auf der Anzeigeeinheit dargestellt werden. Sofern der Lautstärkeregler der Vielzahl Schaltflächen lediglich in einer teilweise transparenten Ansicht überlagert war, erscheint nach dem Verstreichen der vordefinierten Zeitdauer die Vielzahl Schaltflächen ohne jegliche Überlagerung. Auf diese Weise kann ein weiterer Bedienschritt zum Ausblenden des Lautstärkereglers entfallen, wodurch der Anwender sich einerseits frühzeitiger vollständig seiner Fahraufgabe widmen kann, andererseits eine Bedienung der Vielzahl Schaltflächen bzw. der mit dieser assoziierten Funktionen wieder durch den Anwender bedienbar werden.

Ist der Lautstärkeregler eingeblendet worden, kann ein Doppelklick auf den Lautstärkeregler die Lautstärke auf einen minimalen Wert ("Mute"-Stumm) steuern. Auf diese Weise ist eine situationsabhängige Unterdrückung einer Audiowiedergabe rasch, intuitiv und einfach möglich. Sofern die aktuelle Lautstärke beim Erkennen des Doppelklicks bereits einen minimalen Wert aufweist, kann die Lautstärke im Ansprechen auf das Erkennen des Doppelklicks vor oder auf der Anzeigeeinheit einen zuletzt eingestellten (nicht minimalen) Wert annehmen. Dieser Vorgang kann davon abhängig gemacht werden, ob der minimale Wert durch einen Doppelklick angesteuert wurde oder ob eine Wischgeste zur Einstellung des minimalen Wertes vorgenommen wurde. Insbesondere für den Fall, dass ein Doppelklick den minimalen Wert veranlasst hatte, ist ein weiterer Doppelklick zur Aufhebung der Mute-Stumm-Funktion besonders intuitiv und rasch vornehmbar.

Gemäß einem zweiten Aspekt der vorliegenden Erfindung wird eine Anwenderschnittstelle mit einer Anzeigeeinheit zum Darstellen einer Vielzahl Schaltflächen vorgeschlagen. Die Anzeigeeinheit kann beispielsweise fest in einem Fortbewegungsmittel verbaut sein. Solche Anzeigeeinheiten werden häufig als zentrale Informationsanzeigen ("central information display", CID) bezeichnet. Alternativ kann auch ein Kombiinstrument als Anzeigeeinheit dienen bzw. von der Anzeigeeinheit umfasst sein. Grundsätzlich ist die vorliegende Erfindung jedoch unabhängig von automobilen Anwendungen vorteilhaft einsetzbar. Die Anwenderschnittstelle umfasst weiter eine Bedieneinheit zur Gestenerkennung, wobei die Gesten entweder in einem Annäherungsbereich vor der Anzeigeeinheit und/oder unter Kontakt mit einer Oberfläche der Anzeigeeinheit erfolgen können. Wichtig ist lediglich, dass eine erkannte Geste dahingehend erkannt und ausgewertet werden kann, ob sie über der Vielzahl Schaltflächen erfolgt ist bzw. der Vielzahl Schaltflächen zugeordnet werden kann. Weiter ist eine Steuereinheit in der Anwenderschnittstelle vorgesehen, welche die Anwenderschnittstelle einrichtet, ein Verfahren gemäß dem erstgenannten Erfindungsaspekt durchzuführen. Die Merkmale, Merkmalskombinationen sowie die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird. Bevorzugt umfasst die Anzeigeeinheit eine berührungssensitive Oberfläche vor der Anzeigeeinheit und/oder eine LED-basierte Annäherungssensorik. Die LED-basierte Annäherungssensorik kann insbesondere Infrarot-LEDs umfassen, um den Anwender nicht zu blenden und dennoch eine sichere Gestenerkennung durchführen zu können. Sofern es sich bei der Anwenderschnittstelle um ein elektronisches tragbares Endgerät handelt, können die Anzeigeeinheit, die Bedieneinheit und die Steuereinheit in einem gemeinsamen Gehäuse untergebracht sein.

Die Vielzahl Schaltflächen kann mindestens eine Funktion aufweisen, welche nicht mit einer Musikwiedergabesteuerung assoziiert ist. Mit anderen Worten kann die Anwenderschnittstelle zusätzlich zur Musikwiedergabe unterschiedliche Funktionsumfänge aufweisen, welchen auf der Anzeigeeinheit darstellbare Menüs bzw. Ansichten zugeordnet sind. Auch die nicht der Musikwiedergabe zugeordneten Ansichten können Vielzahlen Schaltflächen aufweisen, welche bei einer erfindungsgemäßen Wischgesteneingabe das erfindungsgemäße Verfahren durchführen.

Gemäß einem dritten erfindungsgemäßen Aspekt wird ein Computerprogrammprodukt vorgeschlagen, welches Instruktionen umfasst, welche, wenn sie durch einen programmierbaren Prozessor (z.B. einer erfindungsgemäßen Anwenderschnittstelle gemäß dem zweiten Erfindungsaspekt) ausgeführt werden, den Prozessor veranlassen, die Schritte eines Verfahrens gemäß dem erstgenannten Erfindungsaspekt durchzuführen.

Entsprechend wird gemäß einem vierten Aspekt der vorliegenden Erfindung eine Signalfolge repräsentierend Instruktionen vorgeschlagen, welche, wenn sie durch einen programmierbaren Prozessor (z.B. einer Anwenderschnittstelle gemäß dem zweitgenannten Erfindungsaspekt) ausgeführt werden, den Prozessor veranlassen, die Schritte eines Verfahrens gemäß dem erstgenannten Erfindungsaspekt durchzuführen.

Gemäß einem fünften Aspekt der vorliegenden Erfindung wird ein Fortbewegungsmittel vorgeschlagen, welches eine Anwenderschnittstelle aufweist, wie sie in Verbindung mit dem zweitgenannten Erfindungsaspekt eingehend beschrieben worden ist. Das Fortbewegungsmittel kann ein Fahrzeug, insbesondere ein straßenzugelassener Pkw/Lkw, sein. Entsprechend ergeben sich auch hier die Merkmale, Merkmalskombinationen und die sich aus diesen ergebenden Vorteile entsprechend dem zweitgenannten Erfindungsaspekt, weshalb zur Vermeidung von Wiederholungen auf die obigen Ausführungen verwiesen wird.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Fahrzeugs gemäß einem Ausführungsbeispiel der vorliegenden Erfindung;
- Figur 2: eine Bildschirmansicht auf einer Anzeigeeinheit sowie einen Bedienschritt gemäß der vorliegenden Erfindung;
- Figuren 3 bis 10: Bedienschritte in Verbindung mit einer Anzeigeeinheit gemäß einem Ausführungsbeispiel der vorliegenden Erfindung; und
- Figur 11: ein Flussdiagramm veranschaulichend Schritte eines Ausführungsbeispiels eines erfindungsgemäßen Verfahrens.

### Ausführungsformen der Erfindung

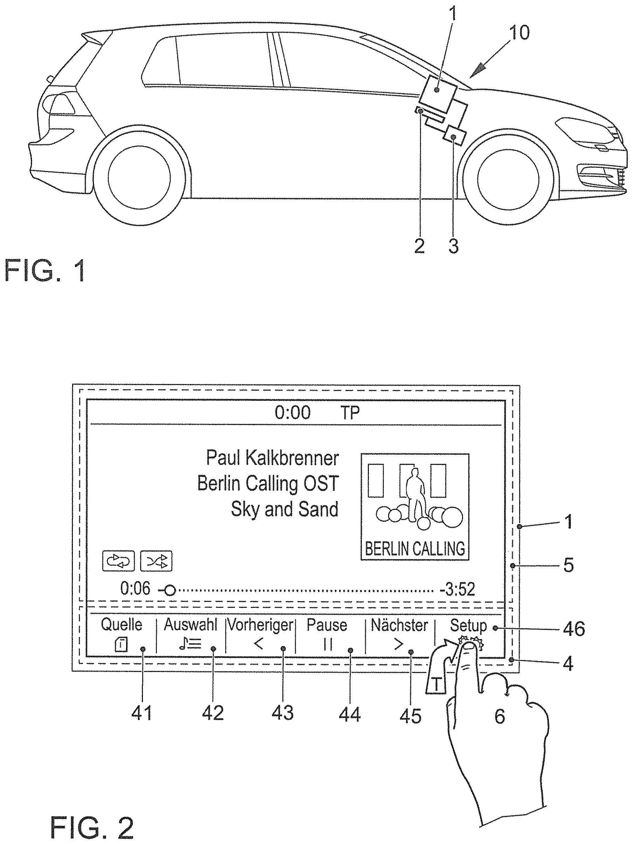

Figur 1 zeigt ein Fahrzeug 10 als Fortbewegungsmittel, in dessen Armaturenbrett ein Display 1 als Anzeigeeinheit eingelassen ist. Das Display 1 ist informationstechnisch wirkverbunden mit einem elektronischen Steuergerät 3 als Steuereinheit, welches ebenfalls mit einer Infrarot-LED-Leiste 2 als Bedieneinheit informationstechnisch wirkverbunden ist. Die erfindungsgemäße Bedienung wird in Verbindung mit den nachfolgenden Figuren erläutert.

Figur 2 zeigt eine Darstellung einer Anzeigeeinheit 1, in deren oberen Teil eine Hauptansicht 5 einer Musikwiedergabefunktion erkennbar ist. Unterhalb der Hauptansicht 5 ist eine Bedienleiste 4 in Form einer Vielzahl Schaltflächen 41, 42, 43, 44, 45, 46 angeordnet. Die Schaltflächen sind in aufsteigender Reihenfolge einer Quellauswahl, einer Titelauswahl, einer Rücksprungfunktion, einer Pause-/Wiedergabefunktion, einer "nächster Titel"-Funktion sowie einer Einstellungsfunktion zugeordnet. Die Hand 6 eines Anwenders führt eine Tippgeste T bezüglich der sechsten Schaltfläche 46 aus und startet somit die Darstellung von Einstellungen (um welche es im Rahmen der vorliegenden Erfindung nicht gehen soll). Die Einstellungsfunktion ist eine Primärfunktion, welche der sechsten Schaltfläche 46 zugeordnet ist. In Verbindung mit den nachfolgenden Figuren wird eine erfindungsgemäße Bedienung der Bedienleiste 4 erläutert.

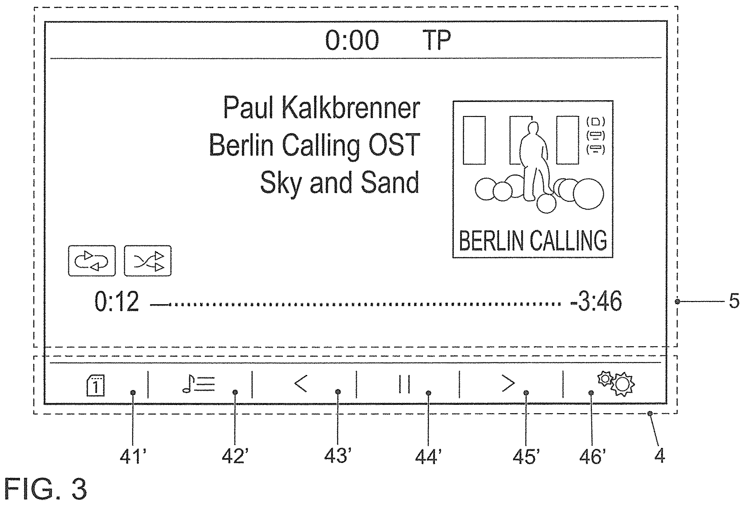

Figur 3 zeigt im Wesentlichen die in Figur 2 dargestellte Ansicht, wobei die Schaltflächen 41, 42, 43, 44, 45, 46 der Figur 2 in verminderter Detailtiefe dargestellt werden, um Platz auf dem Display zu sparen. Entsprechend werden lediglich Symbole auf den Schaltflächen 41', 42', 43', 44', 45', 46' dargestellt, so lange der Anwender kein Eingabemittel im Annäherungsbereich der Bedieneinheit hält.

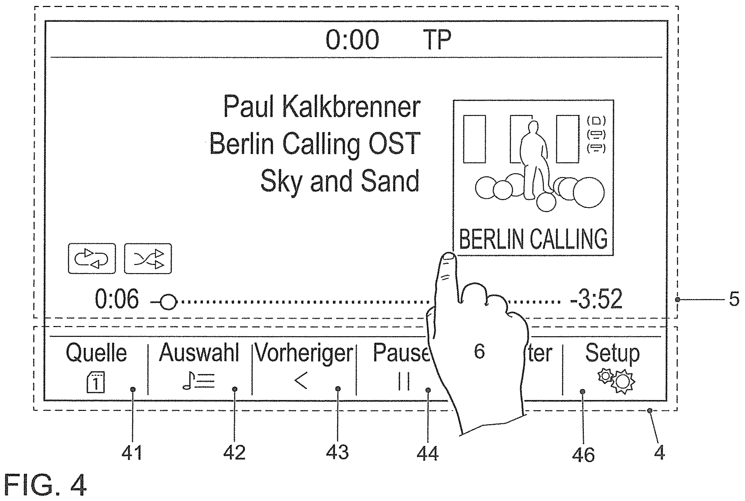

In Figur 4 hat der Anwender seine Hand 6 in dem Annäherungsbereich der Bedieneinheit geführt, im Ansprechen worauf wieder die erweiterte Darstellung der in Figur 2 vorgestellten Schaltflächen 41, 42, 43, 44, 45, 46 verwendet wird.

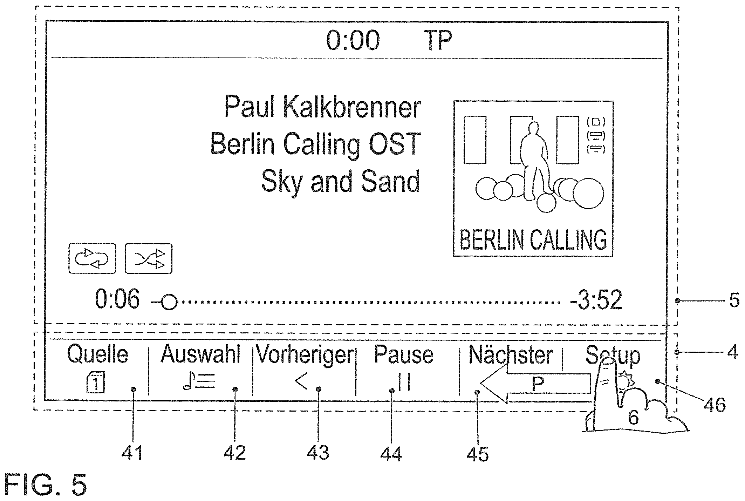

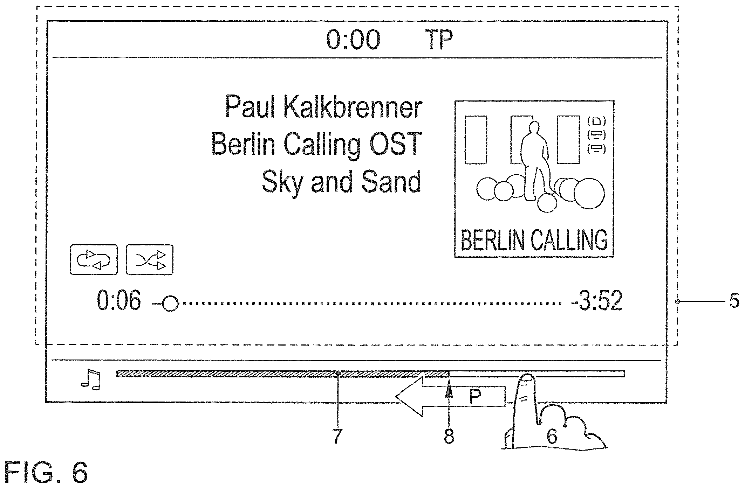

In Figur 5 startet die Hand 6 des Anwenders eine in Richtung des Pfeils P orientierte Wischgeste ausgehend von der sechsten Schaltfläche 46 in Richtung der Schaltflächen 41, 42, 43, 44, 45 niedrigerer Ordnungszahlen. Sobald die Wischgeste P von der Bedieneinheit erfasst und von der Steuereinheit erkannt worden ist, wird ein Lautstärkeregler 7 eingeblendet, wie er in Figur 6 dargestellt ist.

In Figur 6 hat der Anwender seine Hand 6 unter Kontakt mit dem Display 1 nach links geschoben, um die Lautstärke zu verringern. In Ansprechen auf die erkennte Wischgeste P wird der Lautstärkeregler 7 anstatt der Schaltflächen 41, 42, 43, 44, 45, 46 dargestellt. Etwa in der Mitte der horizontalen Leiste des Lautstärkereglers 7 wird die aktuelle Lautstärke 8 durch einen Sprung im Kontrast der Leiste veranschaulicht. Dies kommt dadurch zustande, dass die Hand 6 des Anwenders beim Beginn der Wischgeste nicht die mit der aktuellen Lautstärke 8 korrelierende Position auf dem Display 1 angewählt hat.

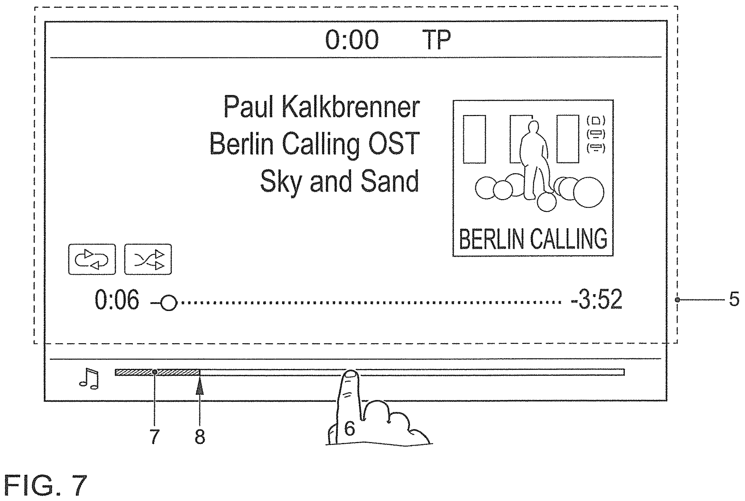

In Figur 7 hat der Anwender die gewünschte aktuelle Lautstärke 8 eingestellt. Der Versatz zwischen der Position seiner Hand 6 und der aktuellen Position 8 ist hierbei konstant geblieben. Der Anwender hebt seine Hand 6 nun von der Oberfläche des Displays 1 ab.

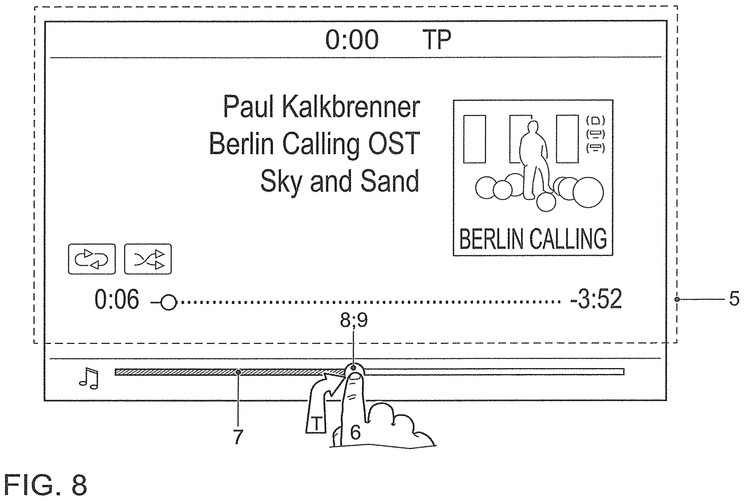

In Figur 8 hat der Anwender seinen Wunsch nach einer erhöhten Wiedergabelautstärke dadurch geäußert, dass er die Oberfläche des Displays 1 im Bereich des Lautstärkereglers 7 durch eine Tippgeste T bedient hat, im Ansprechen worauf ein Bedienelement 9 an der Stelle der aktuellen Lautstärke 8 angezeigt wird und sowohl das Bedienelement 9 als auch die aktuelle Lautstärke 8 entsprechend der aktuellen Position der Tippgeste T angezeigt werden. Der Anwender ist mit der aktuell eingestellten Lautstärke 8 einverstanden und hebt im Anschluss an die in Figur 8 dargestellte Bediensituation seine Hand 6 aus dem Kontakt- und Annäherungsbereich der erfindungsgemäßen Anwenderschnittstelle heraus.

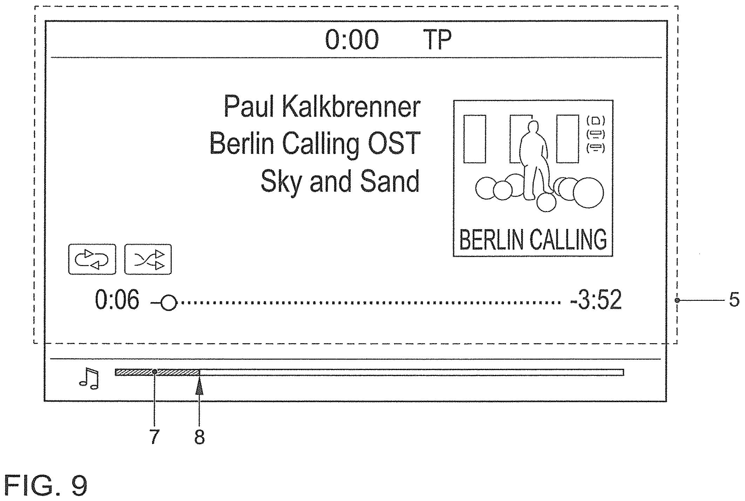

Figur 9 zeigt die in Figur 8 dargestellte Situation nach dem Entfernen der Hand 6 des Anwenders aus dem Kontakt- und Annäherungsbereich der erfindungsgemäßen Anwenderschnittstelle. Ein (nicht dargestellter) Timer ermittelt diejenige Zeit, die seit dem Verlassen des Kontakt- und Annäherungsbereiches durch die Hand verstrichen ist.

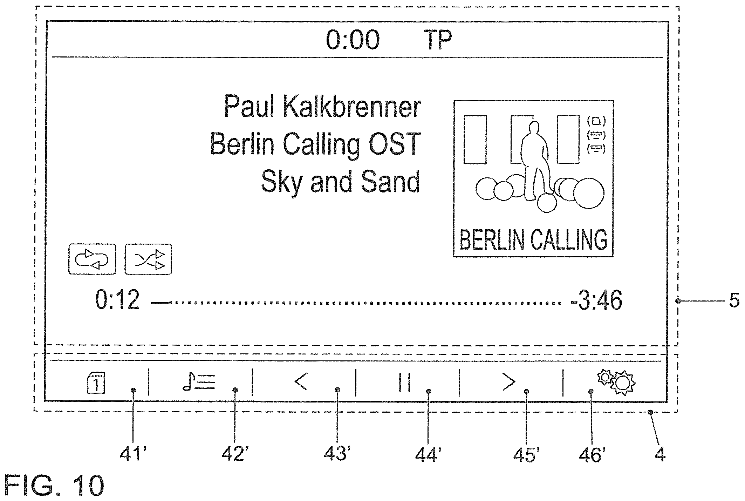

Figur 10 zeigt die in Figur 9 veranschaulichte Darstellung nach dem Verstreichen des Timers. Anstatt des Lautstärkereglers 7 werden nun wieder reduzierte Schaltflächen 41', 42', 43', 44', 45', 46' auf der Bedienleiste 4 dargestellt. Eine Tippgeste in diesem Bereich würde nun wieder Primärfunktionen der Schaltflächen 41', 42', 43', 44', 45', 46 starten, anstatt den aktuellen Lautstärkewert sprunghaft zu ändern.

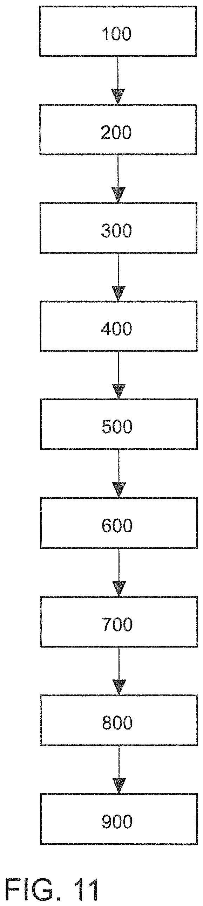

Figur 11 zeigt ein Flussdiagramm veranschaulichend Schritte eines Ausführungsbeispiels eines erfindungsgemäßen Verfahrens. In Schritt 100 wird eine Vielzahl Schaltflächen auf der Anzeigeeinheit einer erfindungsgemäßen Anwenderschnittstelle dargestellt. In Schritt 200 wird eine Tippgeste im Bereich einer Schaltfläche der Vielzahl Schaltflächen erkannt. Im Ansprechen darauf wird in Schritt 300 eine mit der durch die Tippgeste adressierten Schaltfläche assoziierten Funktion ausgelöst. Anschließend wird in Schritt 400 eine Wischgeste vor und/oder auf einer der dargestellten Schaltflächen erkannt. Im Ansprechen darauf wird die Lautstärke einer aktuellen Audiowiedergabe in Abhängigkeit der erkannten Wischgeste gesteuert. Ebenfalls im Ansprechen auf das Erkennen der Wischgeste (Schritt 400) wird in Schritt 600 ein Lautstärkeregler auf der Anzeigeeinheit angezeigt. Anschließend entfernt der Anwender sein Eingabemittel aus dem Annäherungsbereich der erfindungsgemäßen Anwenderschnittstelle, was einen sogenannten "Inactivity Timer" ("Aktivitätslosigkeitszeitmesser") startet. In Schritt 700 wird der Ablauf des "Inactivity Timers" erkannt, im Ansprechen worauf in Schritt 800 der Lautstärkeregler wieder verborgen wird. Das Verbergen des Lautstärkereglers geht einher mit einem erneuten Darstellen (bzw. vollständigen Darstellen) der Vielzahl Schaltflächen auf der Anzeigeeinheit in Schritt 900.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Display
- 2: Infrarot-LED-Leiste
- 3: elektronisches Steuergerät
- 4: Bedienleiste
- 5: Hauptansicht
- 6: Hand des Anwenders
- 7: Lautstärkeregler
- 8: aktuelle Lautstärke
- 9: Bedienelement des Lautstärkereglers
- 10: Fahrzeug
- 41, 42, 43,: Bedienelemente in erweiterter Darstellung
- 44, 45, 46 41', 42', 43',: Schaltflächen in verminderter Darstellung
- 44', 45', 46' 100 bis 900: Verfahrensschritte
- P: Wischgeste
- T: Tippgeste

## Patentansprüche

1. Verfahren zum Steuern einer Lautstärke mittels einer Anzeigeeinheit (1) umfassend die Schritte:
- Darstellen (100) einer Vielzahl (4) Schaltflächen (41, 42, 43, 44, 45, 46, 41', 42', 43', 44', 45', 46') auf der Anzeigeeinheit (1),
- Erkennen (200) einer Tippgeste (T) im Bereich einer Schaltfläche (46) der Vielzahl (4) Schaltflächen (41, 42, 43, 44, 45, 46, 41', 42', 43', 44', 45', 46'), und
- Auslösen (300) einer mit der Schaltfläche (46) assoziierten Funktion welche sich nicht auf eine Lautstärkeveränderung bezieht, wobei eine Unterbrechung oder Veränderung eines wiedergegebenen Inhaltes nicht als Lautstärkeveränderung zu verstehen ist, **gekennzeichnet durch**
- Erkennen (400) einer Wischgeste (P) vor und/oder auf der Schaltfläche (46) und im Ansprechen auf das Erkennen (400) der Wischgeste (P),
- Starten einer Lautstärkeveränderungsfunktion,
- Steuern (500) der Lautstärke in Abhängigkeit der Wischgeste (P).

2. Verfahren nach Anspruch 1,
- wobei die Vielzahl Schaltflächen (41, 42, 43, 44, 45, 46, 41', 42', 43', 44', 45', 46') für den Zugriff auf jeweilige Primärfunktionen mittels einer Tippgeste (T) eingerichtet sind, und/oder
- wobei die Vielzahl Schaltflächen (41, 42, 43, 44, 45, 46, 41', 42', 43', 44', 45', 46') einer Bedienleiste für eine Bedienung unterschiedlicher Funktionen, insbesondere einer Musikwiedergabe, zugeordnet sind.

3. Verfahren nach einem der vorstehenden Ansprüche umfassend den Schritt:
- Anzeigen (600) eines Lautstärkereglers (7) im Ansprechen auf das Erkennen (400) der Wischgeste (P).

4. Verfahren nach Anspruch 3 weiter umfassend die Schritte:
- Erkennen (200) einer Tippgeste (T) im Bereich des dargestellten Lautstärkereglers (7), und
- Steuern (500) der Lautstärke in Abhängigkeit der Position der Tippgeste (T).

5. Verfahren nach einem der vorstehenden Ansprüche 3 bis 4, weiter umfassend die Schritte:
- Erkennen (700) eines Ablaufes einer vordefinierten Zeitdauer nach einem letzten Steuern (500) der Lautstärke, und im Ansprechen darauf
- Verbergen (800) des Lautstärkereglers (7), und insbesondere
- erneutes Darstellen (900) der Vielzahl Schaltflächen (41, 42, 43, 44, 45, 46, 41', 42', 43', 44', 45', 46') auf der Anzeigeeinheit (1).

6. Verfahren nach einem der vorstehenden Ansprüche 3 bis 5, weiter umfassend die Schritte:
- Erkennen (400) eines Doppelklicks auf den Lautstärkeregler (7), und im Ansprechen darauf
- Steuern (500) der Lautstärke auf einen minimalen Wert ("Mute") oder auf einen vor einem vorherigen Doppelklick auf den Lautstärkeregler (7) eingestellten Wert.

7. Anwenderschnittstelle umfassend:
- eine Anzeigeeinheit (1) zum Darstellen (100) einer Vielzahl (4) Schaltflächen (41, 42, 43, 44, 45, 46, 41', 42', 43', 44', 45', 46'), und
- eine Bedieneinheit (2) zur Gestenerkennung,
**gekennzeichnet durch**
- eine Steuereinheit (3), wobei die Anwenderschnittstelle eingerichtet ist, ein Verfahren gemäß einem der vorstehenden Ansprüche durchzuführen.

8. Anwenderschnittstelle nach Anspruch 7, wobei die Anzeigeeinheit (1) ein Kombiinstrument umfasst oder an zentraler Position in ein Armaturenbrett eines Fortbewegungsmittels (10) eingelassen ist.

9. Anwenderschnittstelle nach Anspruch 7 oder 8, wobei die Bedieneinheit (2) eine berührungssensitive Oberfläche vor der Anzeigeeinheit (1) und/oder eine LED-basierte Annäherungssensorik (2) umfasst.

10. Anwenderschnittstelle nach Anspruch 7 oder 9, wobei die Vielzahl (4) Schaltflächen (41, 42, 43, 44, 45, 46, 41', 42', 43', 44', 45', 46') mindestens eine Funktion aufweist, welche nicht einer Musikwiedergabesteuerung zugeordnet ist.

11. Computerprogrammprodukt umfassend Instruktionen, welche, wenn sie durch einen programmierbaren Prozessor ausgeführt werden, den Prozessor veranlassen, die Schritte eines Verfahrens gemäß einem der vorstehenden Ansprüche 1 bis 6 durchzuführen.

12. Signalfolge repräsentierend Instruktionen, welche, wenn sie durch einen programmierbaren Prozessor ausgeführt werden, den Prozessor veranlassen, die Schritte eines Verfahrens gemäß einem der vorstehenden Ansprüche 1 bis 6 durchzuführen.

13. Fortbewegungsmittel umfassend eine Anwenderschnittstelle nach einem der Ansprüche 7 bis 10.

## Claims

1. Method for controlling a volume by means of a display unit (1) comprising the following steps:
- representing (100) a plurality (4) of buttons (41, 42, 43, 44, 45, 46, 41', 42', 43', 44', 45', 46') on the display unit (1),
- recognizing (200) a tap gesture (T) in the region of one button (46) of the plurality (4) of buttons (41, 42, 43, 44, 45, 46, 41', 42', 43', 44', 45', 46'), and
- triggering (300) a function which is associated with the button (46) and which does not relate to a volume change, wherein an interruption or change of a reproduced content should not be understood as a volume change, **characterized by**
- recognizing (400) a swipe gesture (P) in front of and/or on the button (46) and, in response to recognizing (400) the swipe gesture (P),
- starting a volume change function,
- controlling (500) the volume depending on the swipe gesture (P).

2. Method according to Claim 1,
- wherein the plurality of buttons (41, 42, 43, 44, 45, 46, 41', 42', 43', 44', 45', 46') are configured for access to respective primary functions by means of a tap gesture (T), and/or
- wherein the plurality of buttons (41, 42, 43, 44, 45, 46, 41', 42', 43', 44', 45', 46') are assigned to an operating bar for operation of different functions, in particular of music reproduction.

3. Method according to either of the preceding claims, comprising the following step:
- displaying (600) a volume controller (7) in response to recognizing (400) the swipe gesture (P).

4. Method according to Claim 3, further comprising the following steps:
- recognizing (200) a tap gesture (T) in the region of the represented volume controller (7), and
- controlling (500) the volume depending on the position of the tap gesture (T).

5. Method according to either of the preceding Claims 3 and 4, further comprising the following steps:
- recognizing (700) that a predefined time duration has elapsed after a last process of controlling (500) the volume, and in response thereto
- hiding (800) the volume controller (7), and in particular
- once again representing (900) the plurality of buttons (41, 42, 43, 44, 45, 46, 41', 42', 43', 44', 45', 46') on the display unit (1).

6. Method according to any of the preceding Claims 3 to 5, further comprising the following steps:
- recognizing (400) a double click on the volume controller (7), and in response thereto
- controlling (500) the volume to a minimum value ("mute") or to a value set prior to a previous double click on the volume controller (7).

7. User interface comprising:
- a display unit (1) for representing (100) a plurality (4) of buttons (41, 42, 43, 44, 45, 46, 41', 42', 43', 44', 45', 46'), and
- an operating unit (2) for gesture recognition, **characterized by**
- a control unit (3), wherein the user interface is configured to carry out a method according to any of the preceding claims.

8. User interface according to Claim 7, wherein the display unit (1) comprises an instrument cluster or is incorporated at a central position in a dashboard of a means of transport (10).

9. User interface according to Claim 7 or 8, wherein the operating unit (2) comprises a touch-sensitive surface in front of the display unit (1) and/or an LED-based proximity sensor system (2).

10. User interface according to Claim 7 or 9, wherein the plurality (4) of buttons (41, 42, 43, 44, 45, 46, 41', 42', 43', 44', 45', 46') has at least one function which is not assigned to music reproduction control.

11. Computer program product comprising instructions which, when they are executed by a programmable processor, calls the processor to carry out the steps of a method according to any of the preceding Claims 1 to 6.

12. Signal sequence representing instructions which, when they are executed by a programmable processor, calls the processor to carry out the steps of a method according to any of the preceding Claims 1 to 6.

13. Means of transport comprising a user interface according to any of Claims 7 to 10.

## Revendications

1. Procédé permettant de régler un volume sonore au moyen d'une unité d'affichage (1), comprenant les étapes consistant à :
- représenter (100) une pluralité (4) de boutons de commande (41, 42, 43, 44, 45, 46, 41', 42', 43', 44', 45', 46') sur l'unité d'affichage (1),
- reconnaître (200) un geste d'appui (T) au niveau d'un bouton de commande (46) parmi la pluralité (4) de boutons de commande (41, 42, 43, 44, 45, 46, 41', 42', 43', 44', 45', 46), et
- déclencher (300) une fonction associée au bouton de commande (46) et qui ne concerne pas une modification du volume sonore, une interruption ou une modification d'un contenu en lecture n'étant pas à considérer comme une modification du volume sonore, **caractérisé par**
- la reconnaissance (400) d'un geste d'effleurement (P) devant et/ou sur le bouton de commande (46) et en réaction à la reconnaissance (400) du geste d'effleurement (P),
- démarrer une fonction de modification de volume sonore,
- régler (500) le volume sonore en fonction du geste d'effleurement (P).

2. Procédé selon la revendication 1,
- la pluralité de boutons de commande (41, 42, 43, 44, 45, 46, 41', 42', 43', 44', 45', 46') étant conçue pour l'accès aux fonctions primaires respectives au moyen d'un geste d'appui (T), et/ou
- la pluralité de boutons de commande (41, 42, 43, 44, 45, 46, 41', 42', 43', 44', 45', 46') étant associée à une barre d'outils pour actionner différentes fonctions, en particulier une lecture de musique.

3. Procédé selon l'une quelconque des revendications précédentes, comprenant l'étape consistant à :
- afficher (600) un réglage de volume sonore (7) en réaction à la reconnaissance (400) de la geste d'effleurement (P).

4. Procédé selon la revendication 3, comprenant en outre les étapes consistant à :
- reconnaître (200) un geste d'appui (T) au niveau du réglage de volume sonore (7) représenté, et
- régler (500) le volume sonore en fonction de la position du geste d'appui (T).

5. Procédé selon l'une quelconque des revendications précédentes 3 à 4, comprenant en outre les étapes consistant à :
- reconnaître (700) un écoulement d'une durée prédéfinie après un dernier réglage (500) du volume sonore, et en réaction
- masquer (800) le réglage de volume sonore (7), et en particulier
- représenter (900) à nouveau la pluralité de boutons de commande (41, 42, 43, 44, 45, 46, 41', 42', 43', 44', 45', 46') sur l'unité d'affichage (1).

6. Procédé selon l'une quelconque des revendications précédentes 3 à 5, comprenant en outre les étapes consistant à :
- reconnaître (400) un double clic sur le réglage de volume sonore (7), et en réaction
- régler (500) le volume sonore sur une valeur minimale (« mute ») ou sur une valeur réglée avant un double clic antérieur sur le réglage de volume sonore (7) .

7. Interface utilisateur, comprenant :
- une unité d'affichage (1) servant à représenter (100) une pluralité (4) de boutons de commande (41, 42, 43, 44, 45, 46, 41', 42', 43', 44', 45', 46), et
- une unité d'actionnement (2) servant à la reconnaissance de gestes,
**caractérisée par**
- une unité de commande (3), l'interface utilisateur étant conçue pour exécuter un procédé selon l'une quelconque des revendications précédentes.

8. Interface utilisateur selon la revendication 7, dans laquelle l'unité d'affichage (1) comprend un instrument combiné ou est incorporée dans une position centrale dans un tableau de bord d'un moyen de locomotion (10).

9. Interface utilisateur selon la revendication 7 ou 8, dans laquelle l'unité d'actionnement (2) comprend une surface tactile devant l'unité d'affichage (1) et/ou un système de capteurs de proximité à base de LED (2) .

10. Interface utilisateur selon la revendication 7 ou 9, dans laquelle la pluralité (4) de boutons de commande (41, 42, 43, 44, 45, 46, 41', 42', 43', 44', 45', 46') présente au moins une fonction qui n'est pas associée à une commande de lecture de musique.

11. Produit de programme informatique, comprenant des instructions qui, lorsqu'elles sont exécutées par un processeur programmable, font que le processeur exécute les étapes d'un procédé selon l'une quelconque des revendications précédentes 1 à 6.

12. Séquence de signaux représentant des instructions qui, lorsqu'elles sont exécutées par un processeur programmable, font que le processeur exécute les étapes d'un procédé selon l'une quelconque des revendications précédentes 1 à 6.

13. Moyen de locomotion, comprenant une interface d'utilisateur selon l'une quelconque des revendications 7 à 10.
